# EUROPEAN PATENT SPECIFICATION

(11) **EP 3 287 990 B1**
(45) Date of publication and mention of the grant of the patent: **30.09.2020**
(21) Application number: 16185656.2
(22) Date of filing: 25.08.2016
(51) Int. Cl.: G07C 5/08, G07C 5/00

(54) **DATA ACQUISITION SYSTEM AND METHODS FOR DATA ACQUISITION**
DATENERFASSUNGSSYSTEM UND VERFAHREN ZUR DATENERFASSUNG
SYSTÈME D'ACQUISITION DE DONNÉES ET PROCÉDÉS D'ACQUISITION DE DONNÉES

(43) Date of publication of application: 28.02.2018
(73) Proprietor: Airbus Operations GmbH, 21129 Hamburg (DE)
(72) Inventor: PANNENBÄCKER, Thorsten, 21129 Hamburg (DE)
(74) Representative: Isarpatent

(56) References cited:
- EP-A1- 2 945 244
- US-A1- 2014 372 471
- US-A1- 2015 363 981

## Description

### FIELD OF THE INVENTION

The present invention pertains to a data acquisition system, an aircraft having a data acquisition system and methods for data acquisition.

Although applicable for any kind of acquisition system, the present invention and the corresponding underlying problems will be explained in further detail in conjunction with an aircraft.

### BACKGROUND OF THE INVENTION

In contemporary vehicles such as aircraft or spacecraft there are a multitude of electronic or electric applications which generate data items, for example measurement values of physical parameters, meter readings of electronic equipment or text-bound data blocks. This kind of data needs to be collected in the vehicle during use and made available to central maintenance and control stations remotely from the vehicle. For example, airborne vehicles have onboard applications that generate data during flight which may in some cases be transmitted to airline back offices at the ground for automated processing. In some other cases data generated during flight may be made available to aircraft systems on board of the aircraft during flight.

The document WO 2007/064655 A1 discloses an open data network of an aircraft that facilitates communication between applications related to operation of the vehicle. The document US 2007/0118274 A1 discloses a telematics application protocol which provides a communication framework for applications which allow a user to communicate with a vehicle's onboard processor. The document EP 2 176 963 B1 discloses a scheduled synchronous data transmission scheme for mobile platforms. The document EP 1 798 872 B1 discloses a multi-network aircraft communication system and a method for communicating data on board of an aircraft. The document DE 103 13 467 A1 discloses a method for fault diagnosis using a data protocol converter. The document EP 2 136 377 A1 discloses systems and methods for collecting data in a vehicle. The document WO 2015/015864 A1 discloses a sensor data collection system. The document US 2007/0150160 A1 discloses a dual-architecture microserver card. The document US 2008/0119968 A1 discloses a microserver adapter for an avionics box. The document US 2011/0184607 A1 discloses a method and a system for exposing and recording embedded avionics data. The document US 2007/0260274 A1 discloses methods and systems for aircraft engine trend monitoring include periodically recording the outputs of engine-condition sensors and analyzing the results to examine piston-engine performance trends and predict the need for engine maintenance.

The document US 4,729,102 A discloses flight data recorder system circuitry and airborne integrated data system circuitry as separately programmed microprocessor based systems capable of processing aircraft parametric signals provided by a variety of aircraft signal sources. The document US 2007/0027589 A1 discloses an apparatus for wirelessly communicating data between a plurality of avionics units on an aircraft and a data communication apparatus external to the aircraft which includes, onboard an aircraft, an aircraft data services link having a processor and means for wirelessly transmitting and receiving data to and from a data communication apparatus external to the aircraft, and a plurality of avionics units coupled to a remotely controllable electronic switch, the processor being responsive to data received from the data communication apparatus via the means for wireless transmitting and receiving to identify an intended destination from said avionics units from information contained in a standard format of downloaded ARINC 615 or 615A compliant data, and to automatically control the remotely controllable electronic switch to selectively couple the intended destination avionics unit to the aircraft data services link to provide data communication between the intended destination avionics unit and the data communication apparatus via the aircraft data services link. The document US 2015/0363981 A1 discloses a system for transmitting aircraft data from an aircraft including a data acquisition unit recording aircraft data.

### SUMMARY OF THE INVENTION

It is one of the objects of the invention to achieve an enhanced and more flexible observability of technical systems. Particularly, it is one of the objects of the invention to improve the efficiency of failure diagnostics/prognostics while optimizing required resources in terms of network bandwidth and associated cost.

The invention is defined according to the appended independent claims 1 and 8, and further embodiments according to the appended dependent claims.

One idea of the present invention is to implement a data recording module within a given system while respecting separation and segregation requirements. It may inter alia be applicable to high-value controller equipment as found, for example, in the avionics domain. The data recording module may mainly record data parameters of the given system and to subsequently keep this data accessible for any local or remote environment of the system.

Great advantages associated with the data acquisition system of the invention are the enhanced observability, the decreased development costs and the efficient data management. Recordable data is not limited to a system's defined output but may include all internally available data. The observability is vastly improved by internal modifications without changing the system's interface definitions. The complexity of implementation is comparably low and may be made available as reusable, pre-developed building block, such as for example in a system-on-a-chip (SoC). Different multi-system environments are easy to integrate by using differing communication protocols. Centralised and complex bridges between critical and less critical domains to distributed systems may be advantageously relocated using the data acquisition system of the invention - simple unidirectional interfaces may avoid adverse interference and allow for low DAL levels. Due to data only being transmitted when requested or required bandwidth requirements and transmission costs are decreased. In case of a replacement of the equipment, the latest operational data may be readily available for investigations.

### BRIEF DESCRIPTION OF THE DRAWINGS

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. Like reference numerals designate corresponding similar parts.
Fig. 1 schematically illustrates a data acquisition system according to an embodiment of the invention.
Fig. 2 schematically illustrates an aircraft comprising a data acquisition system according to another embodiment of the invention.
Fig. 3 schematically illustrates a flow diagram of a method for data acquisition according to yet another embodiment of the invention.

In the figures, like reference numerals denote like or functionally like components, unless indicated otherwise. Any directional terminology like "top", "bottom", "left", "right", "above", "below", "horizontal", "vertical", "back", "front", and similar terms are merely used for explanatory purposes and are not intended to delimit the embodiments to the specific arrangements as shown in the drawings.

### DETAILED DESCRIPTION OF THE INVENTION

Generally, this application is intended to cover any adaptations or variations of the specific embodiments discussed herein.

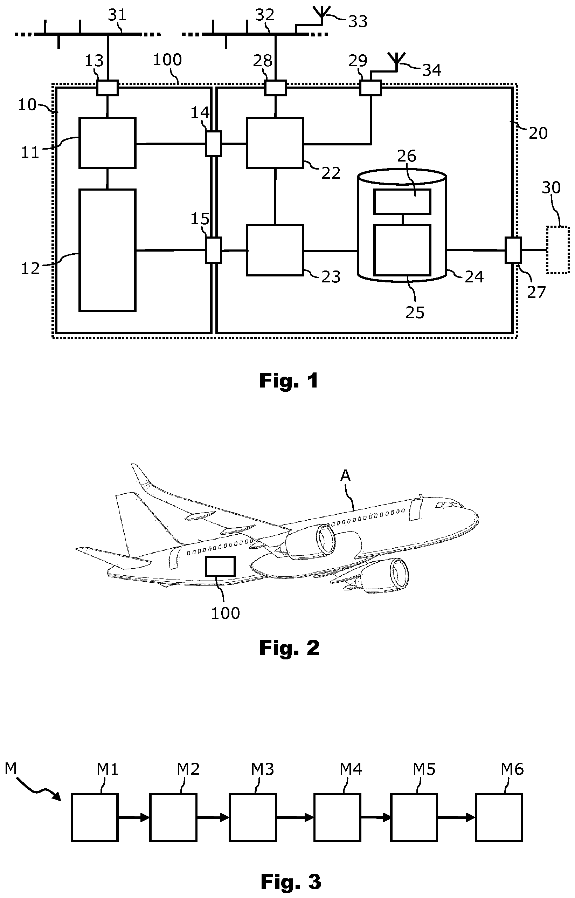

Fig. 1 shows a schematic illustration of a data acquisition system 100, for example in use in a vehicle such as an airborne vehicle as exemplarily depicted with the reference numeral A in Fig. 2. However, the data acquisition system 100 may be employed in any kind of decentralized environment such as ships, cars, robots, remote industrial facilities or other movable or non-movable systems. The data acquisition system 100 employs a control and monitoring apparatus 10 as onboard component of the vehicle and a data collection component 20 coupled to the control and monitoring apparatus 10 via one or more interfaces 14, 15.

The control and monitoring apparatus 10 comprises one or more electronic application components 12 such as sensors, software applications, embedded applications, system components, or any other kind of independently operating component. The number of electronic application components 12 is not explicitly depicted in Fig. 1, however, any other number of electronic application components 12 may be applicable, depending on the desired system requirements. The electronic application components 12 are configured to emit electronic data parameters (hereinafter generally and without limiting the generality referred to as "data") in digital or analog format as data flows.

The electronic application components 12 are coupled to a domain network interface 13 via a multiplexer 11. The domain network interface 13 may in turn be coupled to a domain network, such as for example a critical domain network 31.

The electronic application components 12 are connected to a data input interface formed as an internal system interface 15 to the data collection component 20. At the internal system interface 15 electronic data items from the plurality of electronic application components 12 may be received by a data flow controller 23 implemented in the data collection component 20 for processing of the various electronic data items. The internal system interface 15 only allows for unidirectional transmission of data flows from the plurality of electronic application components 12 to the data flow controller 23 in order to separate the critical system domain at the side of the control and monitoring apparatus 10 from the non-critical domain at the side of the data collection component 20. The data flow controller 23 is coupled to a data collection memory component 24 and is configured to have read and write access to the data storage in order to be able to store electronic data items received by the data collection component 20 as electronic data. The multiplexer 11 of the control and monitoring apparatus 10 may be coupled to an interface component 22 of the data collection component 20 via a multiplexer interface 14. The interface component 22 and/or the multiplexer 11 may in some embodiments be omitted. The multiplexer 11 may in some embodiments be omitted, if the internal system interface 15 is omitted.

The data collection memory component 24 may be subdivided into physically and/or virtually disjunct storage areas as exemplarily illustrated in Fig. 1. The number of disjunct or segregated storage areas is exemplarily shown as two in Fig. 1, however, any other number of storage areas in the data collection memory component 24 may be equally possible as well, depending on the conditions and requirements in the data acquisition system 100. The data collection memory component 24 may for example comprise a non-volatile memory 25 and a main memory 26.

The main memory 26 may be configured to store and provide data and thereby contribute to an increased observability of a given system, such as for example the system connected to the data acquisition system 100 via the domain network 31. The main memory 26 may for example be organised as an in-memory database. As data will be stored continuously with high sampling rates, a memory technology without life-limiting access characteristics may be used for the main memory 26. The non-volatile memory 25 may have a non-volatile characteristic in order to ensure persistence of data. This non-volatile characteristic may for example be implemented either by a combined memory technology or by implementing a back-up memory to which the data is transferred in case of supply power interruptions. The memory capacity of both the main memory 26 and the non-volatile memory 25 may be chosen in order to store a relevant duration of observations and may be readable after the data collection component 20 is removed from its environment, for example during shop maintenance. Parts of the main memory 26, the non-volatile memory 25 or any other memory may be used for additional functions and the operational software of the data flow controller 23 in the data collection component 20.

The data collection memory component 24 may be removably installed in a data storage receptacle of the data collection component 20. The data collection memory component 24 may for example comprise a hard disk, a USB stick, a flash memory card or any other suitable data storage medium.

The manual transport of data to a remote station 30 may be effected by a user such as a technician or a flight crew member. The procedure for manual transport may involve connecting a portable data storage medium to an optional local interface 27 that may be implemented in order provide access to the data collection memory component 24 in case the data collection component 20 is removed from its operating environment, for example for shop maintenance. The data flow controller 23 may activate the transfer of data parameter items stored in the data collection memory component 24 onto the connected portable data storage medium. Once the data transfer has been completed, the portable data storage medium may be disconnected from the data collection component 20 and the data transferred to a remote station 30. It may of course be possible to directly couple a remote station 30 to the data collection memory component 24 via the local interface 27 in order to directly transfer data parameter items under the control of the data flow controller 23 to the remote station 30.

The remote station 30 may for example be located remotely from the data acquisition system 100 with the data collection component 20. The remote station 30 may for example be a ground station, maintenance centre or other stationary facility of an operator of the data acquisition system 100. For use in an airborne vehicle, the remote station 30 may for example be a server of an airline back office operating the airborne vehicle.

The data flow controller 23 of the data collection component 20 may further be configured to manage data flows, i.e. observability, in several directions and to manage some internal functions. Many of its operations to be executed may be implemented in a configurable manner. A configuration of the data flow controller 23 may for example include several parameters for different areas, including but not limited to the description of incoming data flows through the internal interface 15. The configuration may include parameters per data parameter concerning sampling rate, pre-processing options, maximum storage capacity, compression options etc. As an interface description the configuration may also include a catalogue of available data parameters that can be queried to the data flow controller 23 by the environment, for example a failure diagnostics system. The configuration may also include conditions that will be monitored continuously by the data flow controller 23 in order to trigger signals to its environment. The configuration may for example be stored in the data collection memory component 24.

In terms of system internal data flow, the data flow controller 23 may receive any incoming data flow from the control and monitoring apparatus 10 of the data acquisition system 100. Based on the configuration, the data flow controller 23 may process the signals, for example by sampling, pre-processing and/or compressing the data. Afterwards, the data flow controller 23 may manage the persistence of the pre-processed data within the data collection memory component 24, for example by implementing a database with configurable sized ring memories per data item.

The data flow controller 23 may receive incoming data flows from the control and monitoring apparatus 10 and split the data flows into its contained data parameters based on a description of this data flow in a configuration file. In case a received data parameter is configured to be recorded, configured data processing steps may be executed, such as signal processing, sampling, compression, and possibly others. The resulting discrete data parameter records may be stored in configurable fix-sized ring memories based on a data parameter naming catalogue contained in the configuration file.

For the external data flow, the data flow controller 23 may execute the required communications protocols. The data flow controller 23 may respond to data observation requests by retrieving stored data from the data collection memory component 24 and emit a suitable reply via one of a plurality of external interfaces, such as an external domain network interface 28 and an external communication interface 29. The local interface 27 coupled to the data collection memory component 24 may be used to access the data collection memory component 24 directly from outside, for example if some other components of the data collection component 20, such as the data flow controller 23, are not in use or defective.

The data acquisition system 100 may in some cases include an interface antenna 34 coupled to the external communication interface 29. The data collection component 20 may in this regard comprise at least one communication module, for example a satellite communication module, a wirebound communication module, and/or a wireless communication module, which are coupled to the data flow controller 23 or may be included in the data flow controller 23. It may also be possible for the external communication interface 29 to enable communication with a local remote network, for example via wireless local area network or Bluetooth® communication.

The data flow controller 23 may continuously monitor received internal data flows according to configurable conditions. These conditions may for example be described by Boolean or temporal logic expressions in a configuration file. If one of the configurable conditions is detected by the data flow controller 23, a signalling message according to the applicable protocol may transmitted to one or more configured receivers describing the detected condition.

The data acquisition system 100 comprises an internal system interface 15 that acts as a component boundary in two distinct ways: First, the data acquisition system 100 is physically split into the domain of the control and monitoring apparatus 10 and the domain of the data collection component 20. Second, the internal system interface 15 may implement a separation between different domain networks, such as a critical domain network 31 connected to the domain network interface 13 of the control and monitoring apparatus 10 and a less critical domain network 32 connected to an external domain network interface 28 via an interface multiplexer 22 of the data collection component 20. The less critical domain network 32 may in turn include communications ports 33 coupled to remote systems. Those communications ports 33 may for example be counterparts to the communication ports 34 so that the data collection component 20 may wirelessly communicate with a less critical domain network 32 via the interface 29.

System internal data may be transferred from the domain of the control and monitoring apparatus 10 to the domain of the data collection component 20 via the internal system interface 15. As the internal system interface 15 may be located close to processing units of the electronic application components 12, bandwidth limitations may be negligible. The internal system interface 15 may in such cases for example consist of a single bus provided with data from one or more sources amongst the electronic application components 12. In more complex system architectures the internal system interface 15 may be extended either to several busses, such as for separate operational lines, or to include analogue or discrete interfaces.

Observability of systems within the critical domain network 31 may be important to be transparent for applications in less critical domain networks 32. In this regard, the internal system interface 15 may be strictly unidirectional, i.e. data flows may only be transferred from the domain of the control and monitoring apparatus 10 to the domain of the data collection component 20, but not the other way round. A given implemented data flow may be optionally described using a specific configuration file for the data flow controller 23 in order to predefine management conditions for incoming data.

The external interfaces 28 and 29 may allow for bidirectional, protocol-based communication between the data collection component 20 and other systems, such as for example a failure diagnostics system. Due to the domain separating nature of the internal system interface 15, all communication through the external interfaces 28 and 29 may be more lenient on safety considerations. For this reason, it may in some cases not be required to observe specific measures to ensure safe and secure multi-system operations.

The external interfaces 28 and 29 may either be wired or wireless; each of the external interfaces 28 and 29 may be a dedicated interface or may be implemented using the interface 13 of the control and monitoring apparatus 10 through suitable separation techniques, for example tunnelling or multiplexing.

Both the control and monitoring apparatus 10 as well as the data collection component 20 may be supplied with electrical power through the control and monitoring apparatus 10 in order to keep wiring costs low. As an alternative, the data collection component 20 may be supplied with power by Power over Ethernet (PoE) or similar techniques. In order to ensure persistence of data stored in the data collection memory component 24, a suitable power supply has to be guaranteed in case of power outages. If this is not ensured by the choice of memory technology itself, it might be possible to implement a power buffering component in order to allow for sufficient time to back-up the current memory content in a volatile memory component to a non-volatile memory component.

Fig. 3 exemplarily illustrates a method M for data acquisition, for example in a vehicle such as an airborne vehicle A of Fig. 2. The method M may be performed with components of a data acquisition system, such as the data collection component of the data acquisition system 100 as illustrated in conjunction with Fig. 1. The method M may comprise at M1 receiving a data flow from a control and monitoring apparatus 10 including a plurality of electronic application components 12 via an internal interface 15 at a data collection component 20. At M2, the data flow is processed in the data collection component 20, and subsequently stored at M3 in a data collection memory component 24 of the data collection component 20. The processing of the data flow may in some cases involve signal processing, sampling and compressing the data of the data flow.

Optionally, a request for data parameter records may be received at M4. This request may at M5 be interpreted by a data flow controller 23 of the data collection component 20, so that the requested data parameter records may be transmitted at M6 by the data collection component 20 on the basis of the interpreted request.

With the data acquisition system and the method for data acquisition, it may be advantageously possible to achieve an increased and flexible observability of technical systems by introducing a dedicated building block within such systems. In general the data acquisition system and the method for data acquisition as described above are applicable to all kind of equipment, but may be particularly helpful in conjunction with central controllers of a given system.

By separating the observability block from the operational part of a given system it will be possible to implement an independent "read-only" layer within a less critical domain (if applicable) in which more flexible functions could be implemented as for example an improved failure diagnostics function. The system may automatically collect and store electronic data sets which are generated by system and/or software applications onboard of a vehicle such as an aircraft. The centralized onboard management of the data acquisition allows for the collected electronic data sets to be stored in different security domains, depending on the type of system and/or software applications.

The data acquisition system facilitates a manually triggered and/or automatically performed transfer of data and information items. For example, the transfer of data and information items may be performed on-board of an aircraft during flight. In some cases, the transfer of data and information items may be effected to a remote or ground station by means of telecommunication and/or manual transport on a portable data storage device. The kind, volume and behaviour of the data transfer may be conveniently adapted to the needs of the user and the desired transfer type, for example by means of preconfigurable transfer profiles and customizable data sets included in the data acquisition system.

In the foregoing detailed description, various features are grouped together in one or more examples or examples with the purpose of streamlining the disclosure. It is to be understood that the above description is intended to be illustrative, and not restrictive. In particular, the embodiments and configurations described for the systems and aircraft infrastructure can be applied accordingly to an aircraft or spacecraft.

The embodiments were chosen and described in order to best explain the principles of the invention and its practical applications, to thereby enable others skilled in the art to best utilize the invention and various embodiments with various modifications as are suited to the particular use contemplated. In the appended claims and throughout the specification, the terms "including" and "in which" are used as the plain-English equivalents of the respective terms "comprising" and "wherein," respectively. Furthermore, "a" or "one" does not exclude a plurality in the present case.

### List of reference signs

- 10: Control and monitoring apparatus
- 11: Multiplexer
- 12: Electronic application components
- 13: Domain network interface
- 14: Multiplexer interface
- 15: Internal system interface
- 20: Data collection component
- 22: Interface component
- 23: Data flow controller
- 24: Data collection memory component
- 25: Non-volatile memory
- 26: Main memory
- 27: Local interface
- 28: External domain network interface
- 29: External communication interface
- 30: Remote station
- 31: Critical domain network
- 32: Non-critical domain network
- 33: Communications port
- 34: Interface antenna
- 100: Data acquisition system
- A: Aircraft
- M: Method
- M1: Method step
- M2: Method step
- M3: Method step
- M4: Method step
- M5: Method step
- M6: Method step

## Claims

1. Data acquisition system (100), comprising:
a control and monitoring apparatus (10) including a plurality of electronic application components (12) and a multiplexer (11) coupled to the plurality of electronic application components (12);
a domain network interface (13) coupled to the multiplexer (11);
a data collection component (20) including a data flow controller (23) and a data collection memory component (24) coupled to the data flow controller (23);
a plurality of external interfaces (28, 29); and
an interface component (22) implemented in the data collection component (20) and coupled between the data flow controller (23) and the plurality of external interfaces (28, 29), the interface component (22) being configured to allow bidirectional protocol-based communication between the data flow controller (23) and systems connected to the plurality of external interfaces (28, 29),
wherein the data flow controller (23) is configured to manage data flows and internal functions of the data collection component (20), at least some of the internal functions being configurable,
**characterized in that**
the data flow controller (23) is further configured to receive incoming data flows from the electronic application components (12) via an internal system interface (15) and to sample, pre-process and compress the data flows based on a predefined configuration, the internal system interface (15) only allowing for unidirectional transmission of data flows from the plurality of electronic application components (12) to the data flow controller (23).

2. Data acquisition system (100) according to claim 1, wherein the data flow controller (23) is further configured to store the pre-processed data in the data collection memory component (24) and to manage the persistence of the pre-processed data within the data collection memory component (24), particularly by implementing a database with configurable sized ring memories per data item.

3. Data acquisition system (100) according to one of the claims 1 and 2, wherein the data collection memory component (24) comprises one or more of at least one non-volatile memory (25) and at least one main memory (26).

4. Data acquisition system (100) according to claim 3, wherein the data collection memory component (24) comprises combined memory technology and/or a back-up memory.

5. Data acquisition system (100) according to one of the claims 1 to 4, wherein the plurality of external interfaces (27, 28, 29) comprise one or more of a local interface (27) coupled to the data collection memory component (24), an external domain network interface (28) and an external communication interface (29).

6. Data acquisition system (100) according to claim 5, further comprising:
an interface antenna (34) coupled to the external communication interface (29).

7. Aircraft (A), comprising a data acquisition system (100) according to one of the claims 1 to 6.

8. Method (M) for data acquisition performed in a data acquisition system according to claim 1, comprising:
receiving (M1) a first data flow from a first control and monitoring apparatus (10) including a plurality of electronic application components (12) via an internal system interface (15) at a first data collection component (20) and receiving (M1) a second data flow from a second control and monitoring apparatus (10) including a plurality of electronic application components (12) via the internal system interface (15) at a second data collection component (20);
processing (M2) the first data flow in a first data flow controller (23) of the first data collection component (20) and processing (M2) the second data flow in a second data flow controller (23) of the second data collection component (20), at least some of the internal functions of the first data collection component (20) and the second data collection component (20) being configurable; and
storing (M3) the processed first data flow in a data collection memory component (24) of the first data collection component (20) and storing (M3) the processed second data flow in a data collection memory component (24) of the second data collection component (20)
**characterized in that**
the first data flow controller (23) and the second data flow controller (23) sample, pre-process and compress the first and second data flows based on a predefined configuration, the internal system interface (15) only allowing for unidirectional transmission of the first and second data flows from the plurality of electronic application components (12) to the first and second data flow controller (23), respectively.

## Patentansprüche

1. Datenerfassungssystem (100), umfassend:
eine Steuer- und Überwachungsvorrichtung (10), die eine Vielzahl elektronischer Anwendungskomponenten (12) und einen an die Vielzahl elektronischer Anwendungskomponenten (12) gekoppelten Multiplexer (11) beinhaltet,
eine an den Multiplexer (11) gekoppelte Domain-Netzwerkschnittstelle (13),
eine Datensammelkomponente (20), die eine Datenflusssteuerung (23) und eine an die Datenflusssteuerung (23) gekoppelte Datensammelspeicherkomponente (24) beinhaltet,
eine Vielzahl externer Schnittstellen (28, 29) und
eine in der Datensammelkomponente (20) implementierte und zwischen die Datenflusssteuerung (23) und die Vielzahl externer Schnittstellen (28, 29) gekoppelte Schnittstellenkomponente (22), wobei die Schnittstellenkomponente (22) dafür konfiguriert ist, bidirektionale protokollbasierte Kommunikation zwischen der Datenflusssteuerung (23) und mit der Vielzahl externer Schnittstellen (28, 29) verbundenen Systemen zu ermöglichen,
wobei die Datenflusssteuerung (23) dafür konfiguriert ist, Datenflüsse und interne Funktionen der Datensammelkomponente (20) zu verwalten, wobei zumindest einige der internen Funktionen konfigurierbar sind,
**dadurch gekennzeichnet, dass**
die Datenflusssteuerung (23) ferner dafür konfiguriert ist, eingehende Datenflüsse von den elektronischen Anwendungskomponenten (12) über eine interne Systemschnittstelle (15) zu empfangen und die Datenflüsse auf Grundlage einer vorab definierten Konfigurierung abzutasten, vorzuverarbeiten und zu komprimieren, wobei die interne Systemschnittstelle (15) nur unidirektionale Übertragung von Datenflüssen von der Vielzahl elektronischer Anwendungskomponenten (12) an die Datenflusssteuerung (23) zulässt.

2. Datenerfassungssystem (100) nach Anspruch 1, wobei die Datenflusssteuerung (23) ferner dafür konfiguriert ist, die vorverarbeiteten Daten in der Datensammelspeicherkomponente (24) zu speichern und die Beständigkeit der vorverarbeiteten Daten innerhalb der Datensammelspeicherkomponente (24) zu verwalten, insbesondere durch Implementieren einer Datenbank mit Ringspeichern konfigurierbarer Größe pro Datenelement.

3. Datenerfassungssystem (100) nach einem der Ansprüche 1 und 2, wobei die Datensammelspeicherkomponente (24) mindestens einen nichtflüchtigen Speicher (25) und/oder mindestens einen Hauptspeicher (26) umfasst.

4. Datenerfassungssystem (100) nach Anspruch 3, wobei die Datensammelspeicherkomponente (24) kombinierte Speichertechnologie und/oder einen Sicherungsspeicher umfasst.

5. Datenerfassungssystem (100) nach einem der Ansprüche 1 bis 4, wobei die Vielzahl externer Schnittstellen (27, 28, 29) eine an die Datensammelspeicherkomponente (24) gekoppelte lokale Schnittstelle (27), eine externe Domain-Netzwerkschnittstelle (28) und/oder eine externe Kommunikationsschnittstelle (29) umfasst.

6. Datenerfassungssystem (100) nach Anspruch 5, ferner umfassend: eine an die externe Kommunikationsschnittstelle (29) gekoppelte Schnittstellenantenne (34).

7. Flugzeug (A), das ein Datenerfassungssystem (100) nach einem der Ansprüche 1 bis 6 umfasst.

8. Verfahren (M) zur Datenerfassung, das in einem Datenerfassungssystem nach Anspruch 1 durchgeführt wird, umfassend:
Empfangen (M1) eines ersten Datenflusses von einer eine Vielzahl elektronischer Anwendungskomponenten (12) beinhaltenden ersten Steuer- und Überwachungsvorrichtung (10) über eine interne Systemschnittstelle (15) an einer ersten Datensammelkomponente (20) und Empfangen (M1) eines zweiten Datenflusses von einer eine Vielzahl elektronischer Anwendungskomponenten (12) beinhaltenden zweiten Steuer- und Überwachungsvorrichtung (10) über die interne Systemschnittstelle (15) an einer zweiten Datensammelkomponente (20),
Verarbeiten (M2) des ersten Datenflusses in einer ersten Datenflusssteuerung (23) der ersten Datensammelkomponente (20) und Verarbeiten (M2) des zweiten Datenflusses in einer zweiten Datenflusssteuerung (23) der zweiten Datensammelkomponente (20), wobei zumindest einige der internen Funktionen der ersten Datensammelkomponente (20) und der zweiten Datensammelkomponente (20) konfigurierbar sind, und
Speichern (M3) des verarbeiteten ersten Datenflusses in einer Datensammelspeicherkomponente (24) der ersten Datensammelkomponente (20) und Speichern (M3) des verarbeiteten zweiten Datenflusses in einer Datensammelspeicherkomponente (24) der zweiten Datensammelkomponente (20),
**dadurch gekennzeichnet, dass**
die erste Datenflusssteuerung (23) und die zweite Datenflusssteuerung (23) den ersten und den zweiten Datenfluss auf Grundlage einer vorab definierten Konfigurierung abtasten, vorverarbeiten und komprimieren, wobei die interne Systemschnittstelle (15) nur unidirektionale Übertragung des ersten bzw. des zweiten Datenflusses von der Vielzahl elektronischer Anwendungskomponenten (12) an die erste bzw. zweite Datenflusssteuerung (23) zulässt.

## Revendications

1. Système d'acquisition de données (100), comprenant :
un appareil de commande et de surveillance (10) comprenant une pluralité de composants d'application électroniques (12) et un multiplexeur (11) couplé à la pluralité de composants d'application électroniques (12) ;
une interface de domaine de réseau (13) couplée au multiplexeur (11) ;
un composant de collecte de données (20) comprenant un contrôleur de flux de données (23) et un composant de mémoire de collecte de données (24) couplé au contrôleur de flux de données (23) ;
une pluralité d'interfaces externes (28, 29) ; et
un composant d'interface (22) mis en œuvre dans le composant de collecte de données (20) et couplé entre le contrôleur de flux de données (23) et la pluralité d'interfaces externes (28, 29), ce composant d'interface (22) étant configuré de façon à permettre une communication bidirectionnelle basée sur un protocole entre le contrôleur de flux de données (23) et des systèmes connectés à la pluralité d'interfaces externes (28, 29),
le contrôleur de flux de données (23) étant configuré de façon à gérer les flux de données et les fonctions internes du composant de collecte de données (20), au moins certaines des fonctions internes étant configurables,
**caractérisé en ce que**
le contrôleur de flux de données (23) est configuré en outre de façon à recevoir des flux de données entrants provenant des composants d'application électroniques (12) via une interface de système interne (15) et à échantillonner, prétraiter et comprimer les flux de données en se basant sur une configuration prédéfinie, l'interface de système interne (15) permettant uniquement une transmission unidirectionnelle des flux de données de la pluralité de composants d'application électroniques (12) au contrôleur de flux de données (23).

2. Système d'acquisition de données (100) selon la revendication 1, dans lequel le contrôleur de flux de données (23) est configuré en outre de façon à stocker les données prétraitées dans le composant de mémoire de collecte de données (24) et à gérer la persistance des données prétraitées à l'intérieur du composant de mémoire de collecte de données (24), particulièrement en mettant en œuvre une base de données avec des mémoires en anneau dimensionnées configurables par élément de données.

3. Système d'acquisition de données (100) selon une des revendications 1 et 2, dans lequel le composant de mémoire de collecte de données (24) comprend une ou plusieurs d'au moins une mémoire non volatile (25) et d'au moins une mémoire principale (26).

4. Système d'acquisition de données (100) selon la revendication 3, dans lequel le composant de mémoire de collecte de données (24) comprend une technologie de mémoires combinées et/ou une mémoire de sauvegarde.

5. Système d'acquisition de données (100) selon l'une quelconque des revendications 1 à 4, dans lequel la pluralité d'interfaces externes (27, 28, 29) comprend une ou plusieurs d'une interface locale (27) couplée au composant de mémoire de collecte de données (24), d'une interface de réseau de domaine externe (28) et d'une interface de communication externe (29).

6. Système d'acquisition de données (100) selon la revendication 5, comprenant en outre :
une antenne d'interface (34) couplée à l'interface de communication externe (29).

7. Aéronef (A) comprenant un système d'acquisition de données (100) selon une des revendications 1 à 6.

8. Procédé (M) pour l'acquisition de données exécuté dans un système d'acquisition de données selon la revendication 1, comprenant :
la réception (M1) d'un premier flux de données provenant d'un premier appareil de commande et de surveillance (10) comprenant une pluralité de composants d'application électroniques (12) via une interface de système interne (15) au niveau d'un premier composant de collecte de données (20), et la réception (M1) d'un deuxième flux de données provenant d'un deuxième appareil de commande et de surveillance (10) comprenant une pluralité de composants d'application électroniques (12) via l'interface de système interne (15) au niveau d'un deuxième composant de collecte de données (20) ;
le traitement (M2) du premier flux de données dans un premier contrôleur de flux de données (23) du premier composant de collecte de données (20), et le traitement (M2) du deuxième flux de données dans un deuxième contrôleur de flux de données (23) du deuxième composant de collecte de données (20), au moins quelques-unes des fonctions internes du premier composant de collecte de données (20) et du deuxième composant de collecte de données (20) étant configurables ; et
le stockage (M3) du premier flux de données traité dans un composant de mémoire de collecte de données (24) du premier composant de collecte de données (20), et le stockage (M3) du deuxième flux de données traité dans un composant de mémoire de collecte de données (24) du deuxième composant de collecte de données (20), **caractérisé en ce que**
le premier contrôleur de flux de données (23) et le deuxième contrôleur de flux de données (23) échantillonnent, prétraitent et compriment les premier et deuxième flux de données en se basant sur une configuration prédéfinie, l'interface de système interne (15) permettant uniquement la transmission unidirectionnelle du premier et du deuxième flux de données de la pluralité de composants d'application électroniques (12) au premier et au deuxième contrôleur de flux de données (23), respectivement.
